# EUROPEAN PATENT APPLICATION

(11) **EP 3 925 440 A1**
(43) Date of publication of application: **22.12.2021**
(21) Application number: 20180603.1
(22) Date of filing: 17.06.2020
(51) Int. Cl.: A01K 23/00, E01H 1/12

(54) **GRIPPING TOOL**

(71) Applicant: Fenner, Marcel, 5707 Seengen (CH)
(72) Inventor: Fenner, Marcel, 5707 Seengen (CH)
(74) Representative: Dittmann, Rolf

(57) **Abstract**

Disclosed is a kit of parts for forming a gripping tool. The kit of parts comprises two arms (11, 21) shaped as sheets, wherein each arm has a distal gripping section and a proximal handle section (12, 22). The distal gripping section is provided as a frame (13, 23) encompassing a window (14, 24). The first arm and the second arm comprise means (18, 19, 29) at their proximal ends enabling the first and the second arm (11, 21) to be connected to each other at their proximal ends by a mobile connection so as to face each other. At least one of the arms, in the handle section, comprises an abutment feature (16, 26) protruding from a plane connecting a distal edge and a proximal edge of said arm and provided on a face of the arm intended to face the other arm. A gripping tool assembled from the kit of parts is intended to be used in connection with a bag, like, for instance, commonly used bags for disposing animal feces. It allows animal feces and other refuse to be picked up, wrapped and disposed while avoiding the unpleasant tactile sensation of touching the refuse through the bag

## Description

### TECHNICAL FIELD

The present disclosure relates to a kit of parts for forming a gripping tool, and further to a gripping tool, as set forth in the claims.

### BACKGROUND OF THE DISCLOSURE

Dog owners are expected to remove and dispose dog feces from the ground. This is commonly done in that a hand is placed inside a bag, the excrements are gripped with the hand covered by the bag, and finally turning the bag inside out so as to enwrap the excrements. However, grapping the dog or other house animal feces with the hands covered by a thin bag conveys the tactile sensation of grapping a warm, slushy pulp, which is perceived unpleasant. A comparatively unpleasant sensation may be perceived when picking up other refuse.

An abundance of aids for picking up dog feces and wrapping them inside a bag for disposal have been proposed in the art. ES 1 160 983 describes an aid which essentially constitutes a pincer. US 10,100,475 describes a tool having two arms connected to each other by a hinge and further having scoop elements pivotably attached to their distal ends. However, most of the known aids for picking up animal feces or other refuse are comparatively bulky. A person walking a dog might not want to take a bag with her or him only to carry a pick-up tool. A gripping tool which can be stowed flat and be placed in a pocket when not used, but can be easily and fast be converted into a functional gripping tool, would hence be appreciated.

### OUTLINE OF THE SUBJECT MATTER OF THE PRESENT DISCLOSURE

It is an objective of the present disclosure to propose a kit of parts for forming a gripping tool, and a gripping tool, of the type initially mentioned. In particular, a gripping tool shall be provided which allows picking up animal feces and other refuse while avoiding close contact with the hands, with only a thin bag placed between the hands and the refuse. In a more particular instance, the gripping tool shall enable to pick up the refuse and place it inside a bag in which it can be wrapped and disposed without making close contact to the refuse or feel the texture of the refuse. In another aspect, the disclosed device shall be provided such as to be stowed flat and be conveniently placed and carried in a pocket when not in use, while allowing to be easily converted into a functional gripping tool if required and to be likewise easily re-converted into a flat, space-saving configuration after use.

This is achieved by the subject matter described in claim 1.

Further effects and advantages of the disclosed subject matter, whether explicitly mentioned or not, will become apparent in view of the disclosure provided below.

Accordingly, disclosed is a kit of parts for forming a gripping tool. The kit of parts comprises a first arm shaped as a sheet and a second arm shaped as a sheet. Each arm has a distal gripping section and a proximal handle section, wherein the distal gripping section is provided as a frame encompassing a window. The first arm and the second arm comprise means at their proximal ends enabling the first and the second arm to be connected to each other at their proximal ends by a mobile connection so as to face each other. It may be said that the arms, when connected to each other at their proximal ends, face each other with inner faces of the arms. The arms , when connected to each other at their proximal ends, define a gripping plane between them. At least one of the arms, in the handle section, comprises a protruding feature protruding from a plane connecting a distal edge and a proximal edge of said arm and provided on a face of the arm intended to face the other arm. Said face which is intended to face the other arm may also be referred to as the "inner face" of the arm, or of the sheet forming the arm, respectively. The protruding feature is intended to serve as an abutment for the other arm when the kit of parts is functionally assembled to form a gripping tool. The protruding feature is thus also referred to as the "abutment feature".

In another point of view, the herein disclosed subject matter set forth in claim 1 may be considered as proposing a gripping tool comprising a first arm shaped as a sheet and a second arm shaped as a sheet, wherein each arm has a distal gripping section and a proximal handle section, and wherein further the distal gripping section is provided as a frame encompassing a window. The first and second arms are connected at their proximal ends by a mobile connection, facing each other with inner faces of the arms and defining a gripping plane between the arms. At least one of the arms, in the handle section, comprises an abutment feature protruding from a plane connecting a distal edge and a proximal edge of said arm, wherein the protruding feature is arranged between the first and the second arm. The abutment feature is intended to serve as an abutment for the respective other arm. Hence, a pressure applied on both arms distal from the abutment feature deforms the arms elastically and results in a gripping action of the gripping tool, wherein the distal edges of the arms approach each other. The connection between the first and second arms is in certain non-limiting embodiments provided such that the gripping tool can be disassembled into a kit of parts comprising the first and second arms, which in turn allows the two sheet-shaped arms to be stowed away individually. In other embodiments the gripping tool is adapted and configured to be converted from a functional configuration in which at least one of the arms abuts an abutment feature provided on the other arm and the assembled kit of parts forms an open gripping tool, to a flat, space-economic stow-away configuration, and vice versa. In use, the gripping sections of the gripping tool may be placed inside a bag intended to wrap the feces or other refuse to be removed from the ground with the distal edges of the arms being spaced apart from each other. The bag extends between the distal edges of the arms. By holding the gripping tool with the bag placed over the gripping sections, or the distal ends, respectively, of the arms downwards and placing the part of the bag extending between the distal ends over the refuse, the refuse is covered by the bag. In applying pressure on both arms distal from the abutment feature the arms flex over the abutment feature, and the distal ends of the arms perform the gripping action and are essentially shifted below the refuse. While performing this action, the refuse, covered by the part of the bag which initially was placed between the distal ends of the arms, is held within the windows while being wrapped inside the bag. The refuse wrapped inside the bag can subsequently be lifted from the ground by lifting the gripping tool. Finally, the part of the bag outside the arms can be flipped over the closed gripping tool with the refuse and closed, and the pressure on the arms can be released so as to remove the closed bag from the gripping tool. The closed bag can be disposed and the gripping tool can be converted into the stow-away configuration and can easily be carried, for instance, in a pocket of a piece of clothing.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

In cases in which the mobile connection inhibits a center of rotation - for instance, if the mobile connection is provided by a hinge - it might be found useful if the at least one abutment feature of at least one of the arms is provided at maximum 50 % of the distance from the center of rotation of the mobile connection to a most proximal edge of the window. This provides sufficient space on the arms distal to the abutment feature for grasping the arms in the handle section and applying pressure to flex the arms to perform the required gripping action. Moreover, there is a sufficient lever from the abutment feature to the distal edge of the arms so as to provide the required range of motion of the distal edges of the arms and enable that the gripping tool might be closed at the distal end, i.e. the distal edges of the arms at least essentially get in contact with each other, without excessive bending of the arms, which else might in turn result in plastic deformation or structural failure of the arms.

In embodiments, the at least one abutment feature may be provided as a kink of the sheet forming the at least one arm. In other embodiments, the at least one abutment feature may be provided as a bulge protruding from the sheet forming the at least one arm. It may be provided that the bulge is off-centered with respect to a proximal-distal axis of the at least one arm. It may further, in particular in said embodiments, be provided that the arms, when connected to each other, i.e. when the gripping tool is assembled, may be shifted or swiveled sideway with respect to each other such that the bulge gets located lateral of the other arm and the gripping tool may be stowed flat.

In further exemplary embodiments a pin may extend generally across a proximal-distal axis of at least one arm, wherein the pin is provided distant from a face of the sheet forming the arm. It will be understood that the pin may advantageously be placed adjacent the face of the sheet forming the arm which is intended to face the other arm. The pin may for an instance be affixed to a lateral edge of the arm. The distance between the inner face of the sheet and the pin may be chosen such that the counterpart arm can be placed between the sheet and the pin.

As noted above, the arms comprise means at their proximal ends enabling the first and the second arm to be connected to each other at or proximate to their proximal ends by a mobile connection. In a first non-nonlimiting instance, a first one of the arms comprises at least one hinge pin at its proximal edge, the at least one hinge pin extending at least essentially in the sheet-plane of said first arm and at least essentially perpendicular to a proximal-distal axis of said first arm. The second one of the arms comprises at least one hinge knuckle at the proximal end of said second arm. The at least one hinge knuckle is dimensioned to receive the at least one hinge pin provided at the proximal edge of the first arm within the hinge knuckle. In particular, the opening of the at least one hinge knuckle which is intended to receive the at least one hinge pin is provided so as to receive and guide the hinge pin at least essentially perpendicular to a proximal-distal axis of said second arm. Hence, the at least one hinge pin provided at the proximal edge of the first arm and the at least one hinge knuckle provided at the proximal edge of the second arm are adapted and configured to jointly form a hinge connecting the two arms. In more particular instances, the at least one hinge knuckle forms a latch and is circumferentially open so as to be latched over the hinge pin in a radial direction of the hinge knuckle.

It may be provided that the at least one hinge knuckle and the at least one hinge pin are adapted and configured to be assembled to jointly form a hinge having a play along the axis of the hinge pin. This would allow the arms of an assembled gripping tool to be laterally displaced with respect to each other. This may be found useful to place one arm lateral of an abutment feature on the other arm in a stow-away configuration of the assembled gripping tool and for moving one arm abutting said abutment feature for forming a functional gripping tool.

In yet further non-nonlimiting exemplary embodiments the at least one hinge pin may be provided with a free end so as to be received in the hinge knuckle in a direction along the axis of the at least one hinge pin.

It is understood that the hinges as described above enable a relative pivoting movement of the arms relative to each other around an axis which is coplanar with the sheets forming the arms. In other embodiments, a pin extends from a first one of the arms in a proximal region of the handle section at least essentially perpendicular to the sheet plane of said first arm and a second one of the arms is formed with a through opening formed through said sheet-shaped second arm, wherein said opening is sized and shaped to receive an axle of the pin. The pin and the opening are thus adapted and configured to jointly form a hinge connecting the two arms.

In order to further enhance the space-saving stowing of the herein disclosed subject matter at least one of the arms may be collapsible. Collapsible, as herein used, may refer to any capability of reducing the size or a dimension of an arm. For one instance, at least one of the arms may be provided as a telescopic arm, wherein a distal section is extendable from a proximal section. The distal section and the proximal section may be slidably linked to each other. For an instance, the frame which is intended to encompass the window may be extendable from the handle section by a sliding movement. For another instance at least one of the arms may be provided as a foldable arm, wherein a distal section is retractable from a proximal section. The distal section and the proximal section may be pivotably and/or hingedly linked to each other. For an instance, the frame which is intended to encompass the window may be retractable from the handle section.

In a further aspect, a gripping tool, which is particularly suited for picking up feces and other refuse is disclosed. The skilled person will appreciate that, more specifically, by virtue of disclosing the kit of parts as outlined above, also a gripping tool which is intended to be assembled from said kit of parts is disclosed.

Hence, further disclosed is, in another aspect, a gripping tool comprising two arms shaped as sheets, wherein each arm has a distal gripping section and a proximal handle section, wherein each distal gripping sections is provided as a frame encompassing a window, and wherein the arms are connected to each other at their proximal ends by a mobile connection and, in more particular embodiments, by a pivotable connection. The sheet-shaped arms face each other with inner faces of the arms. In an aspect, the arms define a gripping plane between the arms. At least one of the arms, in the handle section, comprises a protruding feature protruding from a plane connecting a distal edge and a proximal edge of said arm and provided on the inner face and facing the other arm. In more particular embodiments, the gripping tool is assembled from a kit of parts as disclosed above.

It is understood that the features and embodiments disclosed above may be combined with each other. It will further be appreciated that further embodiments are conceivable within the scope of the present disclosure and the claimed subject matter which are obvious and apparent to the skilled person.

### BRIEF DESCRIPTION OF THE DRAWINGS

The subject matter of the present disclosure is now to be explained in more detail by means of selected exemplary embodiments shown in the accompanying drawings. The figures show
- Fig. 1: a first embodiment of a gripping tool assembled from the kit of parts in a functional configuration;
- Fig. 2: the gripping tool of figure 1 in a stow-away configuration;
- Fig. 3: a second embodiment of a gripping tool assembled from the kit of parts in a functional configuration;
- Fig. 4: the gripping tool of figure 3 in a stow-away configuration;
- Fig. 5: a third embodiment of a gripping tool assembled from the kit of parts in a functional configuration;
- Fig. 6: the gripping tool of figure 5 in a stow-away configuration;
- Fig. 7: a fourth embodiment of a gripping tool assembled from the kit of parts in a functional configuration;
- Fig. 8: the gripping tool of figure 7 in a stow-away configuration;
- Fig. 9: a fifth embodiment of a gripping tool assembled from the kit of parts;
- Fig. 10: a detail outlining the mobile connection between the arms of the gripping tool of figure 9;
- Fig. 11: a gripping tool with slideably collapsible arms in the stow-away configuration, with the arms in the collapsed state;
- Fig. 12: the gripping tool of figure 11 with the arms in the extended state;
- Fig. 13: a further embodiment of a gripping tool with slideably collapsible arms in the stow-away configuration, with the arms in the collapsed state;
- Fig. 14: the gripping tool of figure 13 with the arms in the extended state and in the functional configuration;
- Fig. 15: a gripping tool with foldable arms iwith the arms in the collapsed state; and
- Fig. 16: the gripping tool of figure 15 with the arms in the extended state.

It is understood that the drawings are schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

With the exemplary embodiments outlined below, the subject matter of the present disclosure is explained by virtue of gripping tools assembled from the herein disclosed kits of parts.

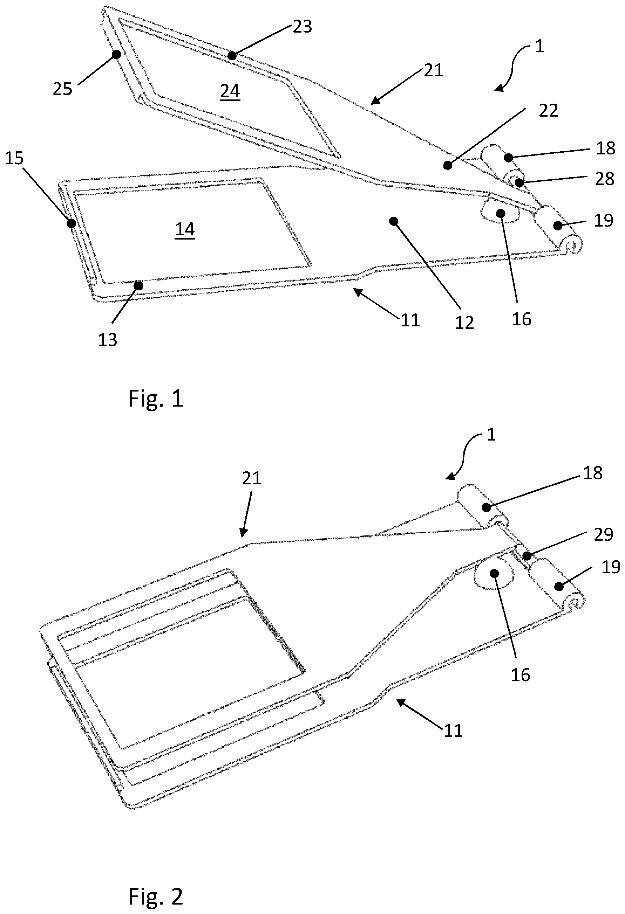

A first exemplary embodiment of a gripping tool is shown in figures 1 and 2. Gripping tool 1 comprises arms 11 and 21. Each arm 11, 21 comprises a proximal handle section 12 and 22, respectively, and a distal gripping section. The distal gripping sections are provided as frames 13, 23 encompassing a respective window 14, 24. It will be appreciated that in the context of the present disclosure the term proximal is intended to designate the part of an element or an assembly which is intended to be located close to a user, when used as intended, while distal is intended to designate the part of an element or an assembly which is more distant from the user. At their proximal ends, arms 11 and 21 are connected by a hinge. The hinge is formed by hinge knuckles 18 and 19 provided at the proximal end of one of the arms. The hinge knuckles receive hinge pins 28, 29 provided at the proximal end of the other arm. Arm 21 extends from hinge pins 28, 29 between the knuckles 18 and 19. Hence, hinge pins 29 cannot be axially inserted into hinge knuckles 18, 19. To account for this fact, hinge knuckles 18 and 19 are formed as latches which are circumferentially open so as to be the radially latched over hinge pins 28, 29. Further, a bulge 16 is formed on an inner side of arm 11, and in the proximal part of the handle section. The width of arm 21 at the joint with hinge pins 28, 29 is smaller than the distance between hinge knuckles 18, 19. Hence, arms 11 and 21 can be laterally displaced with respect to each other, along the axis of hinge pins 28, 29. In figure 1, the assembled kit of parts is assembled as a gripping tool and is in the functional configuration. To this extent the proximal part of the handle section of arm 21 is placed over bulge 16 which thus acts as an abutment for arm 21. In applying pressure on the outside of the handle sections 12 and 22 of arms 11 and 21, and distal from bulge 16, the arms flex towards each other in the distal parts and hence perform a gripping action. The gripping functionality is further supported by bars 15 and 25 positioned on the inner side and at the distal edges of arms 11, 21. When the thus assembled gripping device is used to pick up and enwrap refuse, the distal gripping sections of the arms, or the distal gripping section of the gripping tool, respectively, which in turn is jointly formed by the distal gripping sections of the arms, is put inside a bag. The open gripping tool with the distal part placed inside the bag may then be held with the distal end downward and placed onto the ground with the distal ends of the arms placed on two sides of the refuse. Hence, the refuse is covered by the bag. In applying pressure on the outside of the handle sections 12 and 22, respectively, of the arms the distal ends of the arms, covered by the bag, are moved towards each other and perform a gripping motion. Windows 14 and 24 avoid squeezing the refuse. When the distal end of the gripping tool is closed, the refuse is placed inside the bag and may be lifted off the ground. The part of the bag which is placed outside of gripping tool 1 may then be flipped over and closed so as to enwrap the refuse, which may subsequently be disposed while contained inside the bag. In applying the gripping tool a tactile sensation from the refuse through the bag is avoided.

When not in use, arm 21 may, due to the above-described play of the connecting hinge along the axis of hinge pins 28 and 29, and be laterally displaced relative to arm 11, as shown in figure 2. The proximal section of arm 21 is shaped and sized so as to enable positioning the proximal part of arm 21 lateral of bulge 16. This allows the gripping tool to be stowed away flat and be placed in a pocket.

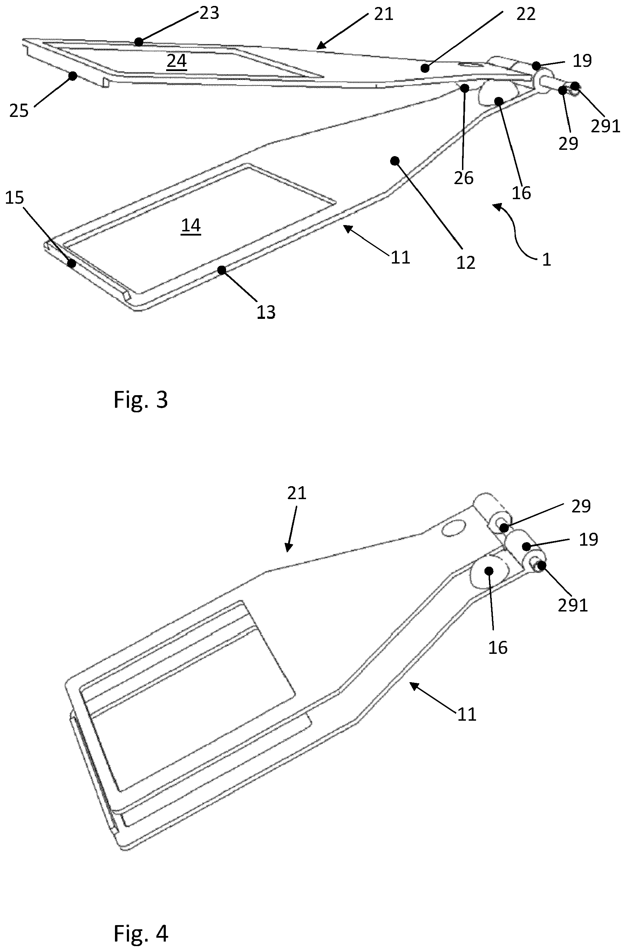

A second exemplary embodiment is shown in figures 3 and 4. The embodiment shown in figures 3 and 4 defines over the embodiments shown in figures 1 and 2 mainly in that both arms the 11 and 21 comprise a bulge. 16 and 26, respectively, which are adapted and configured to serve as an abutment for their respective counterpart arm when the kit of parts is functionally assembled to form a gripping tool. Further, the hinge providing the mobile connection of the two arms at the proximal ends of the two arms is different than in the embodiment of figures 1 and 2. The hinge comprises a single hinge pin 29 and a single hinge knuckle 19. Hinge knuckle 19 can be circumferentially closed, as single hinge pin 29 cantilevers and comprises a free axial end, so as to be inserted through hinge knuckle 19 along the axis of hinge pin 29. In a manner perfectly familiar to a skilled person, a thickening 291 is provided at the free axial end of hinge pin 29 and is axially slotted so as to allow thickening 291 to be radially compressed and to pass through the opening of hinge knuckle 19 when being compressed, but have a radial dimension larger than the opening of hinge knuckle 19 when being released. Thus, detachment of hinge pin 29 from hinge knuckle 19 is avoided if thickening 291 is not purposefully compressed. Thickening 291 hence secures the assembly of hinge pin 29 and hinge knuckle 19 to form a hinge connection, and the assembly of arms 11, 21. Hinge pin 29 is longer than the axial dimension of hinge knuckle 19. Thus, the assembled hinge has a play along the hinge axis, allowing arms 11 and 21 to be laterally displaced with respect to each other. The assembled gripping tool can thus easily be converted between a functionally functional configuration as shown in figure 3 and a stow-away configuration as shown in figure 4. In the functional configuration, arms 11 and 21 are arranged such that the proximal part of each arm faces a bulge on the other arm, such that, when pressure is applied on the arms distal from the bulges, the bulges serve as abutments for the respective counterpart arm and thus enable the gripping motion of the gripping sections of the arms as described in connection with figure 1. In the stow-away configuration shown in figure 4, the arms are arranged such that each arm is placed lateral of the bulge on the counterpart arm, thus forming a compact, flat, space-saving configuration for being stowed away.

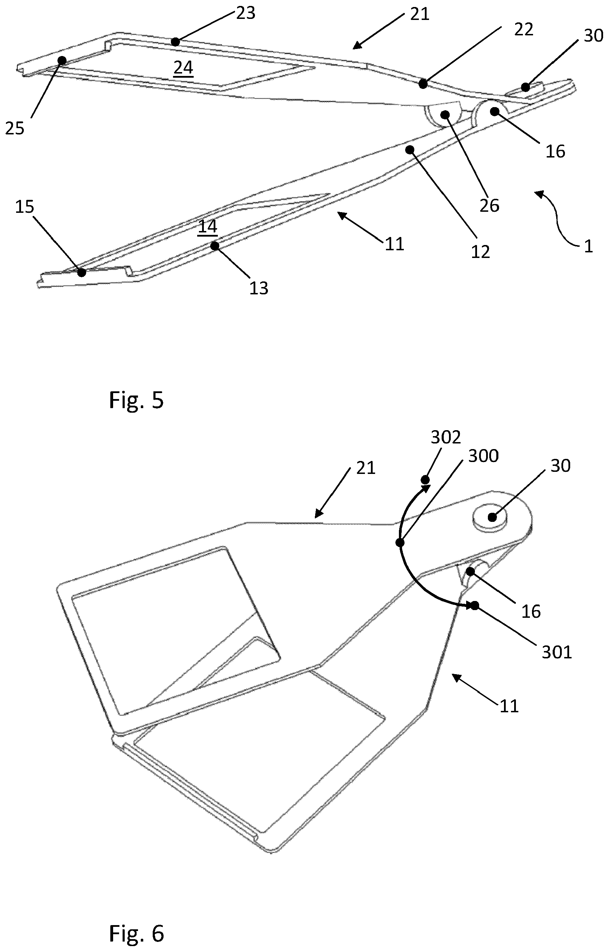

In a further exemplary embodiment shown in figures 5 and 6 the mobile connection at the proximal end of the arms 11, 21 is provided by a hinge pin 30 extending from arm 11 and perpendicular to the sheet plane of arm 11, wherein hinge pin 30 is received in a through hole provided in counterpart arm 21. The thus formed hinge connection allows pivoting of the arms relative to each other as indicated by arrow 300 in figure 6. Each of arms 11, 21 comprises a bulge 16, 26. Bulges 16 and 26 have a ramp-shaped configuration, such that the respective counterpart arm can easily slide onto the bulge upon a movement of arm 21 relative to arm 11 in the direction designated by 301 in figure 6, and may thus assume the functional configuration outlined in figure 5. Each arm 11, 21 is, in the configuration outlined in figure 5, placed over a counterpart bulge 26 and 16, respectively, which then in turn serves as an abutment for the respective counterpart arm, allowing the gripping action as outlined above. By rotating arm 21 relative to arm 11 along the direction designated by 302 in figure 6, the arms can be placed lateral of the bulges, such that the assembled gripping tool assumes a flat stow-away configuration as shown in figure 6.

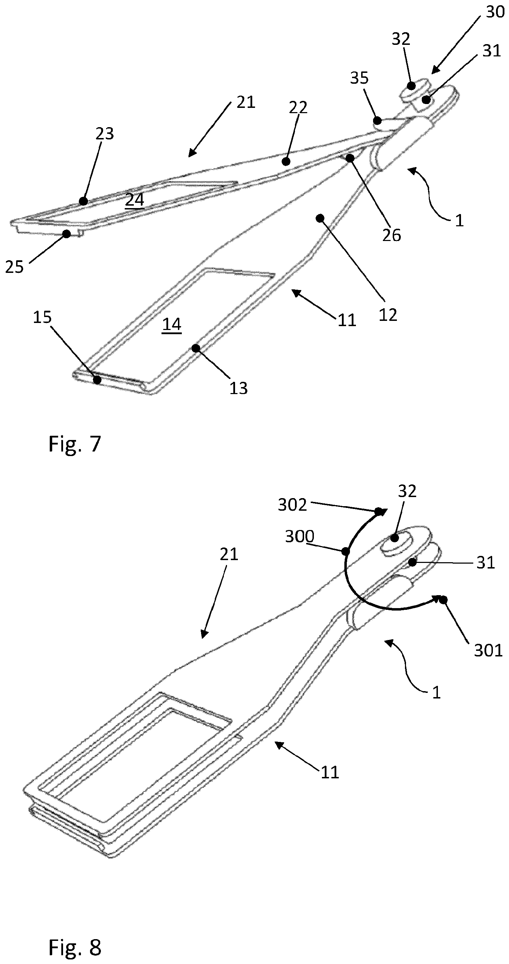

In the embodiment outlined in figures 7 and 8, hinge pin 30 extends from arm 11 and is received in a through opening in arm 21. Hinge pin 30 comprises pin axle 31 and flattened pin head 32. Pin head 32 serves as an end stop so as to avoid detachment of arm 21 from hinge pin 30. However, pin axle 31 is dimensioned so as to allow an axial play of the proximal end of arm 21 along pin axle 31. A transverse pin 35 is attached to arm 11 and extends across the proximal part of handle section 12 of arm 11. Transverse pin 35 extends at a distance from arm 11 which allows arm 21 to be placed between arm 11 and transverse pin 35. In a functional configuration, arm 21 is, in the proximal part of handle section 22, captured between arm 11 and transverse pin 35. Further, arm 21 comprises bulge 26 distal from transverse pin 35. Bulge 26 is adapted and configured to serve as an abutment for arm 11 when the gripping tool is in the functional configuration as shown in figure 7. With reference to figure 8, it will be appreciated that hinge pin 30 received within a through opening in arm 21 allows pivoting of arms 11 and 21 relative to each other along the arrow indicated at 300. The length of pin axle 31 may in particular at least essentially equal twice the sheet thickness of arm 21 plus the diameter of transverse pin 35. Starting from the stow-away configuration shown in figure 8, arm 21 may first be rotated relative to arm 11 in the direction designated by 302. The proximal end of arm 21 may then be displaced along pin axle 31 towards the proximal end of arm 11, and arm 21 may subsequently be rotated relative to arm 11 in the direction indicated by arrow 301. Thus, the proximal part of handle section 22 of arm 21 will be placed between arm 11 and transverse pin 35, while bulge 26 slides onto arm 11 so as to serve as an abutment for arm 11. The gripping tool, or the assembled kit of parts, respectively, is then in the functional configuration as shown in figure 7. After use, arm 21 may again be rotated relative to arm 11 in the direction designated by arrow 302 in figure 8 until arm 21 is released from transverse pin 35. The proximal end of handle section 22 of arm 21 may then be displaced along pin axle 31 towards pin head 32, and arm 21 may subsequently again be rotated in the direction designated by 301, whereby it is placed over transverse pin 35. The gripping tool then assumes the flat stow-away configuration shown in figure 8.

It may in embodiments not explicitly shown, but, by virtue of the present description, being apparent to a person having skill in the art, be provided that axle 31 is dimensioned such that the proximal part of handle section 22 of arm 21 is received between the proximal part of handle section 12 of arm 11 and pin head 32 with no or minimal play. Bulge 26 is omitted in said embodiment. Arm 21 may then be placed between the handle section of arm 11 and transverse pin 35 in the stow-away configuration, while being placed above transverse pin 35 in the functional configuration, whereby transverse pin 35 serves as the abutment protrusion which enables the gripping action.

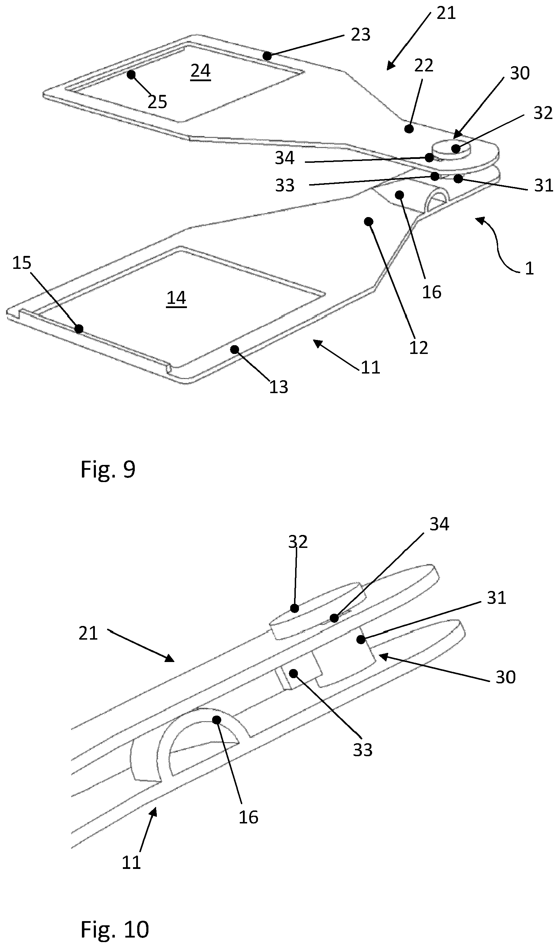

In certain embodiments, axle 31 may comprise a cam 33, while the through opening of arm 11, through which axle 31 is received, comprises a lateral recess 34 which is sized to allow cam 33 to pass through, as shown in figures 9 and 10. Cam 33 is arranged and dimensioned such that the sheet forming arm 21 can be located between cam 33 and pin head 32 as well as between cam 33 and arm 11. Lateral recess 34 is arranged such as to match cam 33 in essentially only one angular position in which any abutment features provided on either of arms 11, 21 are not positioned in abutment with the respective counterpart arm. When arms 11 and 21 are rotated with respect to each other such that cam 33 and recess 34 match each other, the proximal part of handle section 22 may be displaced along pin axle 31 to be placed either adjacent the proximal part of arm 11 or adjacent pin head 32. The arms may then be mutually rotated back into a mutually coinciding position, wherein they may assume either a functional configuration in which they may jointly serve as a gripping tool, or a flat stow-away configuration.

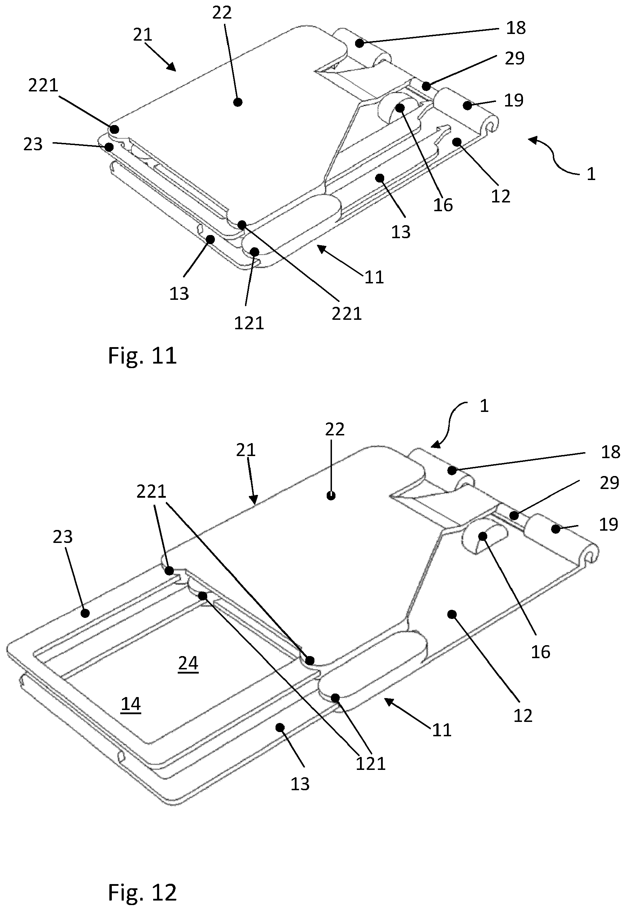

The additional features outlined in connection with the embodiments shown in figures 11 through 16 may be used in combination with any of the embodiments shown in the preceding figures and serve to further enhance the compactness of the gripping tool in the stow-away configuration.

In the embodiments shown in figures 11 and 12, and figures 13 and 14, respectively, arms 11 and 21 are provided as telescopic arms. Handle sections 12 and 22 are provided with linear guides 121 and 221, respectively, in which frames 13 and 23 are displacably received so as to be displaceable in a proximal-distal direction of the arms. Figure 11 shows the collapsed, stow-away configuration of gripping tool 1. Figure 12 shows a configuration in which the gripping device is flat, but frames 13 and 23 are extended from handle sections 12 and 22, so as to encompass windows 14 and 24. The skilled person will readily appreciate that, when lifting arm 21 from arm 11 and shifting arm 21 relative to arm 11 towards hinge knuckle 19 the proximal part of handle section 22 will abut bulge 16, such that gripping tool 1 assumes the functional configuration.

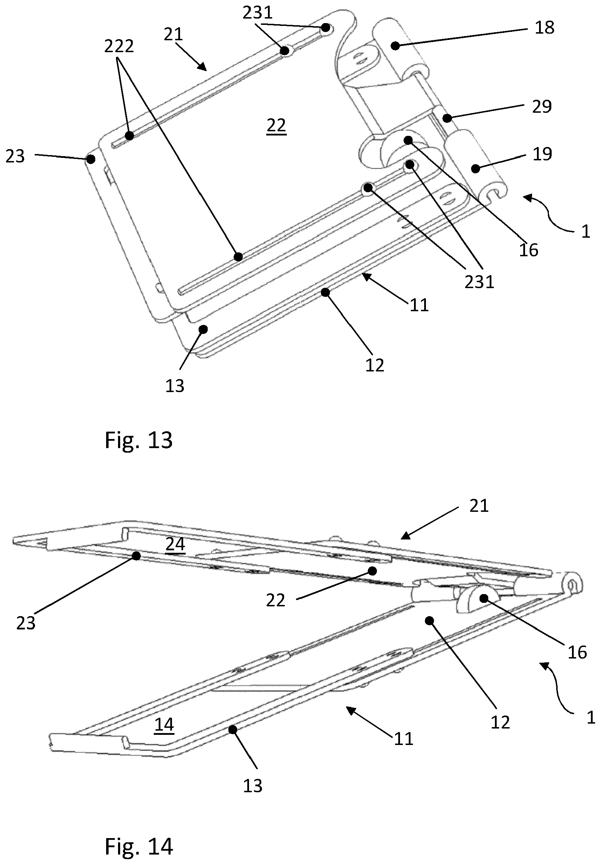

Figures 13 and 14 depicts an embodiment which is largely similar to that shown in figures 11 and 12. Frames 13 and 23 are slidably extendable from handle sections 12 and 22. Frame 23 is linked to handle section 22 by mushroom-shaped linking pins 231 which are guided in guiding slots 222, thus enabling displacability of frame 23 relative to handle section 22 in a proximal-distal direction of arm 21. Although not explicitly shown, the person having skill in the art will appreciate that frame 13 is displacably linked to handle section 12 in a similar manner. Figure 13 depicts a collapsed, flat stow-away configuration of gripping tool 1, whereas figure 14 depicts a functional configuration with frames 13 and 23 extended from handle sections 12 and 22 and encompassing windows 14 and 24.

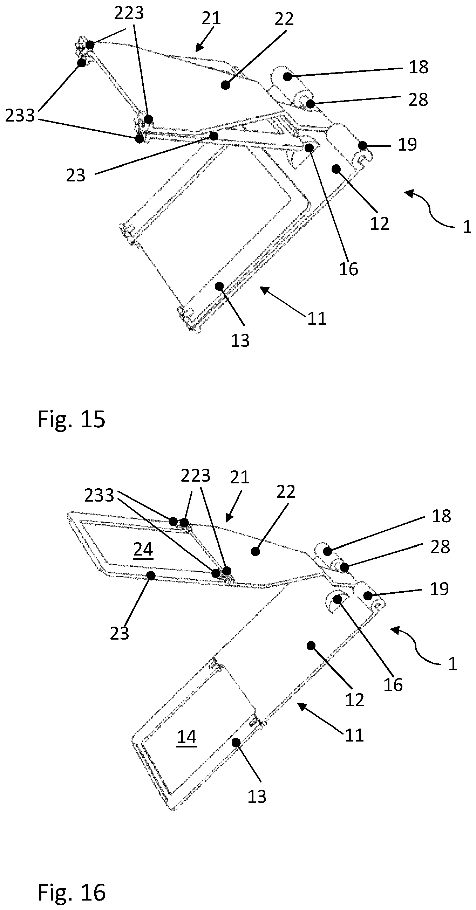

Figures 15 and 16 outline an embodiment in which the arms 11 and 21 are foldable. Frames 13 and 23 are linked to handle sections 12, 22, respectively, by living hinges. Handle section 22 is provided with abutments 223 on the outside surface at the distal end. Frame 23 is provided with abutments 233 arranged such that the abutments are located at the proximal end of frame 23 and on the outer surface of arm 21 when frame 23 is extended. As becomes apparent by virtue of figure 16, abutments 223 and 233 are arranged and configured to abut each other when frame 23 is extended, so as to avoid overextension of frame 23 with respect to handle section 22. Abutments 223 and 233 thus stabilize frame 23 with respect to handle section 22 when frame 23 is extended and experiences a mechanical load from a direction between arms 11 and 21, as will be exerted upon gripping refuse with the gripping tool. While not explicitly outlined in the drawings, the skilled person will appreciate that also handle section 12 and frame 13 of arm 11 are provided with abutments for avoiding hyperextension of frame 13 relative to handle section 12.

It will be appreciated that the herein disclosed subject matter provides for an inexpensive and reusable tool for gripping, picking up and disposing animal feces and other refuse. The device can be easily converted between a functional configuration and a space-saving flat and/or collapsed stow-away configuration.

Said conversion can be easily effected by hand and without the use of tools. In the stow-away configuration, the gripping tool can be transported for instance in a pocket of a piece of clothing, which facilitates taking the gripping tool when for instance walking a dog. The gripping tool can be made, for instance, from metal, recycled plastic, biodegradable plastic or bio-sourced plastic, or any other suitable material, like, while not limited to, thermoplastics. By using the gripping tool in connection with a bag, like, for instance, commonly available bags for disposing animal feces, animal feces and other refuse can be picked up, wrapped and disposed while avoiding the unpleasant tactile sensation of touching the refuse through the bag. Further, the tool will not be in direct contact with the refuse and thus stay clean. The kit of parts, and the gripping tool, are in specific embodiments sized to fit inside a commonly available bag for disposing dog feces.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

## Claims

1. A kit of parts for forming a gripping tool, the kit of parts comprising a first arm (11) shaped as a sheet and a second arm (21) shaped as a sheet and each arm having a distal gripping section and a proximal handle section (12, 22), wherein the distal gripping section is provided as a frame (13, 23) encompassing a window (14, 24), wherein the first arm and the second arm comprise means (18, 19, 29; 30) at their proximal ends enabling the first and the second arm (11, 21) to be connected to each other at their proximal ends by a mobile connection so as to face each other, wherein at least one of the arms, in the handle section, comprises an abutment feature (16, 26) protruding from a plane connecting a distal edge and a proximal edge of said arm and provided on a face of the arm intended to face the other arm.

2. The kit of parts according to claim 1, wherein the mobile connection inheres a center of rotation and the at least one abutment feature of at least one of the arms is provided at maximum 50 % of the distance from the center of rotation of the mobile connection to a most proximal edge of the window.

3. The kit of parts according to any of the preceding claims, wherein the at least one abutment feature is provided as a kink of the sheet forming the at least one arm.

4. The kit of parts according to any of claims 1 or 2, wherein the at least one abutment feature is provided as a bulge (16, 26) protruding from the sheet forming the at least one arm.

5. The kit of parts according to the preceding claim, wherein the bulge is off-centered with respect to a proximal-distal axis of the at least one arm.

6. The kit of parts according to any of claims 4 and 5, wherein the bulge comprises a ramp ramping up in a direction generally across a proximal-distal axis of the at least one arm.

7. The kit of parts according to any of claims 1 or 2, wherein a pin (35) extends generally across a proximal-distal axis of at least one arm (11, 21), wherein the pin is provided distant from a face of the sheet forming the arm.

8. The kit of parts according to any preceding claim, wherein a first one of the arms comprises at least one hinge pin (29) at its proximal edge, wherein the at least one hinge pin extends at least essentially in the sheet-plane of said first arm and at least essentially perpendicular to a proximal-distal axis of said first arm, and the second one of the arms comprises at least one hinge knuckle (18, 19) at the proximal end of said second arm, wherein the at least one hinge knuckle is dimensioned to receive the at least one hinge pin provided a the proximal edge of the first arm within the hinge knuckle, such that the at least one hinge pin provided at the proximal edge of the first arm and the at least one hinge knuckle provided at the proximal edge of the second arm are adapted and configured to jointly form a hinge connecting the two arms.

9. The kit of parts according to the preceding claim, wherein the at least one hinge knuckle (18, 19) forms a latch and is circumferentially open so as to be latched over the at least one hinge pin (29) in a radial direction of the hinge knuckle.

10. The kit of parts according to any of the two preceding claims, wherein the at least one hinge knuckle (18, 19) and the at least one hinge pin (29) are adapted and configured to be assembled to jointly form a hinge having play along the axis of the hinge pin.

11. The kit of parts according to claim 8, wherein the at least one hinge pin (29) has a free end so as to be received in the hinge knuckle (19) in a direction along the axis of the at least one hinge pin.

12. The kit of parts according to any of claims 1 to 7, wherein a pin (30) extends from a first one of the arms in a proximal region of the handle section at least essentially perpendicular to the sheet plane of said sheet-shaped first arm and a second one of the arms is formed with a through opening formed through said sheet-shaped second arm, wherein said opening is sized and shaped to receive an axle (31) of the pin so that the pin and the opening are adapted and configured to jointly form a hinge connecting the two arms.

13. The kit of parts according to any preceding claim, wherein at least one of the arms is collapsible.

14. A gripping tool (1) comprising two arms (11, 21) shaped as sheets, wherein each arm has a distal gripping section and a proximal handle section (12, 22), wherein each distal gripping sections is provided as a frame (13, 23) encompassing a window (14, 24), wherein the arms are connected to each other at their proximal ends by a mobile connection and face each other with inner faces of the arms, wherein at least one of the arms, in the handle section, comprises an abutment feature (16, 26) protruding from a plane connecting a distal edge and a proximal edge of said arm and provided on the inner face and facing the other arm.

15. The gripping tool according to the preceding claim, wherein the gripping tool is assembled form a kit of parts according to any of claims 1 to 13.
